# EUROPEAN PATENT APPLICATION

(11) **EP 0 819 651 A1**
(43) Date of publication of application: **21.01.1998**
(21) Application number: 97401734.5
(22) Date of filing: 18.07.1997
(51) Int. Cl.: C02F 1/56, C02F 11/14, C02F 9/00

(54) **Cationic polymer composition for sludge dewatering**

(30) Priority: 19.07.1996 US 684019
(71) Applicant: Callaway Corporation, Columbus, GA 31907 (US)
(72) Inventor: Chang, Kin-Tai, Columbus, GA 31907 (US); Durham III, James Fred, Columbus, GA 31909 (US); Kurowsky, Stephen, Pine Mountain, GA 31822 (US)
(74) Representative: Dubois-Chabert, Guy

(57) **Abstract**

An improved sludge dewatering composition is prepared by (i) forming an aqueous solution of a water soluble nonionic monomer, a cationic comonomer, and a cationic polymer, (ii) emulsifying the aqueous solution in a sufficient quantity of hydrocarbon oil to form a water-in-oil emulsion, and (iii) polymerizing the monomers.

## Description

### FIELD OF THE INVENTION

The present invention is directed to an improved cationic polymer composition and its use for dewatering pulp and raw sewage sludges.

### BACKGROUND OF THE INVENTION

While it has been long known that water soluble polymers in water-in-oil (inverse) emulsion form can be useful in water treatment industries, efforts continue in attempts to produce improved such polymers. U.S. Pat. No. 5,100,951 discloses a stable blend of a cationic water-in-oil emulsion polymer and a cationic aqueous solution polymer useful for sludge dewatering. After each of the cationic polymers has been prepared, the aqueous solution polymer is added to the emulsion polymer in the presence of special stabilizing solvents and surfactants.

It has now been unexpectedly discovered that enhanced dewatering performance is obtained when a cationic polymer composition is prepared by forming an aqueous solution of a nonionic monomer, a cationic monomer, and a cationic polymer to the aqueous solution, forming a water-in-oil emulsion, and then polymerizing the monomers.

Accordingly, it is an object of this invention to prepare cationic polymer compositions in the aqueous phase of a water-in-oil emulsion which emulsion exhibits improved dewatering performance.

It is a further object of this invention to develop an improved method for dewatering pulp and raw sewage sludges.

### SUMMARY OF THE INVENTION

The present invention is directed to an improved sludge dewatering cationic polymer composition prepared by (i) forming an aqueous solution of a water soluble nonionic monomer, a cationic comonomer, a cationic polymer, and water, (ii) emulsifying the aqueous solution in a sufficient amount of a hydrocarbon oil to form a water-in-oil emulsion, and then (iii) polymerizing the monomers. Preferably, the cationic polymer is the reaction product of an epihalohydrin and an amine. Also preferably, a breaker surfactant is added to the resulting emulsion polymer composition to produce a stable self-inverting one-package product.

### DESCRIPTION OF THE PREFERRED EMBODIMENTS

An improved sludge dewatering composition is prepared by first forming an aqueous solution of a water soluble nonionic monomer, a cationic comonomer, and a cationic polymer. Then a water-in-oil emulsion is formed from the aqueous solution and an oil and polymerization is caused to occur.

The polymerization generates a cationic polymer composition which is believed to contain (i) the original cationic polymer in the aqueous solution, (ii) a second cationic polymer produced from a nonionic monomer and a cationic monomer, and (iii) a third cationic polymer in which at least one of the monomers, a polymer chain thereof, and a copolymer chain thereof have been chemically attached to the original cationic polymer. The presence and structure of the third cationic polymer has not been confirmed, but the substantial improvement in dewatering performance which has been observed for the cationic polymer composition of this invention as compared to a blend of cationic polymers (i) and (ii) supports its existence.

The aqueous solution which forms the aqueous phase of the water-in-oil emulsion used to prepare the cationic polymer composition of the present invention contains at least about 5 wt percent nonionic monomer, at least about 3 wt percent cationic monomer, and at least about 1 wt percent cationic polymer. Preferably, the solution contains (a) about 10 to 97 wt percent water soluble nonionic monomer, (b) about 3 to 90 wt percent cationic monomer, and (c) about 2 to 50 wt percent cationic polymer. More preferably the solution contains (a) about 20 to 97 wt percent water soluble nonionic monomer, (b) about 3 to 80 wt percent cationic monomer, and (c) about 2 to 20 wt percent cationic polymer. All of the above percents are on a dry basis.

Suitable nonionic water soluble monomers used to prepare the sludge dewatering compositions of the present invention are any monomers which will yield a water soluble polymer when prepared in a substantial concentration of water, i.e. in a concentration which is sufficiently high to make preparation and shipping of the polymer in aqueous solution economically practical. Examples of suitable nonionic monomers include acrylamide, methacrylamide, N-methylacrylamide, N-methylmethacrylamide, diacetone acrylamide, and the like.

Suitable cationic monomers include aminoalkylacrylate esters, aminoalkylmethacrylate esters, aminoalkylacrylamides, aminoalkylacrylmethacrylamides, 3 -(acrylamido)propyltrimethylammonium chloride, 3 -(methacrylamido)propyltrimethylammonium chloride, diallyldimethylammonium chloride, and 1-trimethylammonium- 2-hydroxypropyl methacrylate. Also useful are the ammonium halide, methosulfate, and methylchloride quaternaries of dimethylaminoethyl acrylate, dimethylaminoethyl methacrylate, diethylaminoethyl acrylate, and diethylaminoethyl methacrylate.

Other comonomers may also be present in minor amounts. They may be water soluble or water-insoluble, provided that the final polymer composition is still water soluble, i.e. it is soluble in water in an amount of at least 1% by weight. If the other comonomers are anionic, the mole proportion thereof should be less than that of the cationic comonomer so that the resulting polymer ionicity is cationic. The other monomers may be anionic, neutral, or amphoteric. Examples of these other monomers include acrylic acid and its salts, methacrylic acid and its salts, vinyl acetate, methyl acrylate, ethyl acrylate, beta-carboxyethyl acrylate, propyl acrylate, methyl methacrylate, ethyl methacrylate, maleic acid and its salts, hydroxyethyl acrylate, hydroxyethyl methacrylate, styrene, acrylonitrile, 2-acrylamido-2-methylpropane sulfonic or phosphonic acid and their salts, dimethylaminopropylmethacrylamide, isopropylaminopropyl methacrylamide, methacrylamidopropylhydroxyethyldimethylammonium acetate, vinyl methyl ether, vinyl ethyl ether, vinyl sulfonic acid and its salts, vinyl phosphonic acid and its salts, vinyl pyridine, vinyl pyrrolidone, vinyl imidazole, vinyl formamide, styrene sulfonic acid and its salts, and the like.

Suitable cationic polymers for use in this invention are any cationic, water soluble polymer which can be prepared in a substantial concentration of water, i.e. in a concentration which is sufficiently high to make preparation and shipping of the polymers in aqueous solution economically practical. Examples of suitable cationic polymers include polydiallyldialkylammonium salts, the polyquaterary ammonium salt of polymers prepared from epihalohydrins and their precursors reacted with dialkyl amines, with or without small amounts of amines with higher functionality as described in U.S. Pat. No. Re 28,807 and Re 28,808, the subject matter of which is incorporated herein by reference. Additional suitable cationic polymers can be found in the article "Polyamines and Polyquaternary Ammonium Salts," in the Encyclopedia of Polymer Science and Engineering, Second Edition, John Wiley & Sons, New York, Vol. 11, pages 489-507. Preferably, the cationic polymer is an epi-polyamine polymer which is the reaction product of an epihalohydrin (or a precursor) and dimethylamine.

The aqueous solution may also have additives typically used in the art of inverse emulsion polymerization, e.g. conventional chain transfer agents, initiators, and sequestrants.

The aqueous solution also usually contains conventional chain transfer agents, initiators and sequestrants, all in conventional amounts. Alternatively, they may be added to the system after a preliminary emulsion has been prepared. The initiator may also be added continuously during the polymerization to better control the rate of polymerization, depending upon the particular monomers used and their reactivities. All of these variations are well known in the art.

Any conventional chain transfer agent, such as propylene glycol, isopropanol, 2-mercaptoethanol, sodium hypophosphite, dodecyl mercaptan, or thioglycolic acid, may be employed. The chain transfer agent is generally present in an amount of about 0.1 to 10 percent by weight of the total emulsion, though more may be used if desired for a particular product.

The initiator may be any free radical producing material well known in the art. The preferred free radical producers are the redox-type and the azo-type polymerization initiators. They may be used either individually or in combinations and generally in an amount of about 0.0005 to 0.5% by weight of the total emulsion. Radiation may be used to initiate the reaction.

Any conventional sequestrant may also be present in the aqueous phase. Examples include such as ethylenediaminetetraacetic acid or pentasodium diethylenetriamine pentaacetate. The sequestrant is generally present in an amount of about 0.01 to 2% of the total emulsion, though more may be utilized.

Once the ingredients of the aqueous solution have been selected, the aqueous solution is formed by mixing the ingredients with any method that homogeneously mixes the ingredients, e.g. by conventional blade stirring.

The aqueous solution generally comprises about 95 to 65%, preferably about 85 to 70%, of the total emulsion. Generally, water is present in an amount of less than about 45%, preferably about 20 to about 40%, and most preferably about 25 to about 35%, of the weight of the total emulsion.

An emulsion is formed by emulsifying the aqueous solution with an oil phase comprising an oil and an emulsifier. The oil phase of the emulsion, which generally comprises from about 5 to 35% of the total emulsion, is comprised of one or more inert hydrophobic liquids. Preferably, the oil phase comprises about 15 to 30% of the emulsion. The oil used may be selected from a large class of organic liquids which are immiscible with water, including liquid hydrocarbons such as unsubstituted and substituted liquid aliphatic, aromatic mixed aliphatic/aromatic hydrocarbons. Representative examples of such oils include benzene, xylene, toluene, mineral oils, kerosenes, napthas, chlorinated hydrocarbons (perchloroethylene), and the like.

The oil phase also contains the primary surfactants, i.e. conventional water-in-oil emulsion polymerization stabilizers. Such stabilizers are well known to the art to promote the formation and stabilization of water-in-oil emulsions. Normally such emulsifiers have HLB values in the range of about 2 to about 10, preferably less than about 7. Suitable such emulsifiers include sorbitan esters, phthalic esters, fatty acid glycerides, glycerine esters, as well as ethoxylated versions of the above and any other well known relatively low HLB emulsifier. Examples of such compounds include sorbitan monooleate, the reaction product of oleic acid with isopropanolamide, hexadecyl sodium phthalate, decyl sodium phthalate, sorbitan stearate, ricinoleic acid, hydrogenated ricinoleic acid, glyceride monoester of lauric acid, glyceride monoester of stearic acid, glycerol diester of oleic acid, glycerol triester of 12-hydroxystearic acid, glycerol triester of ricinoleic acid, and the ethoxylated versions thereof containing 1 to 10 moles of ethylene oxide per mole of the basic emulsifier. Thus any emulsifier which will permit the formation of the emulsion and stabilize the emulsion during the polymerization may be utilized.

The primary surfactants are used alone or in mixtures and are utilized in as low amounts as is possible since an excess will not only increase the cost of the resultant emulsion but may also reduce the performance. As such, all of the primary surfactants should together be used in amounts not greater than about 5% of the total emulsion. Preferably the amount is not greater than 3%, and most preferably it is less than about 2.5%.

To polymerize the monomers, the emulsion is placed in a suitable reaction vessel, free radical generating initiators are activated or added, and the emulsion polymerizes. The initiator may be any free radical producing material well known in the art, e.g. a redox-type or an azo-type polymerization initiator. Such initiators may be used either individually or in combinations and generally in an amount of about 0.0005 to 0.5% by weight of the total emulsion. Radiation may be used to initiate the reaction. Generally, the polymerization occurs in a sealed reaction vessel with a N₂ sparge, and takes place at a temperature that is -20 to 200°C, preferably at about 0 to 100°C, and most preferably at about 35 to 75°C. The polymerization lasts up to several hours, or more, depending on factors such as the amount of the reaction mixture, the ingredients used, the reaction conditions, and the like. Polymerization is generally performed at atmospheric pressure, but other pressures may be used. Preferably, the polymerization is run at a pH of about 2 to 12 and a suitable amount of base or acid is added to the preliminary emulsion to achieve the desired pH.

The polymerization generates a cationic polymer composition which is believed to contain (i) the original cationic polymer in the aqueous solution, (ii) a second cationic polymer produced from the nonionic monomer and the cationic monomer, and (iii) a third cationic polymer in which either or both of the monomers or polymer chains thereof have been chemically attached (probably by grafting) to the original cationic polymer. The presence and structure of the third cationic polymer has not been confirmed, but the substantial improvement in dewatering performance which has been observed for the cationic polymer composition of this invention as compared to a simple blend of the cationic polymers (i) and (ii) supports its existence.

Following completion of the polymerization, the pH of the emulsion may be adjusted as desired, generally to about 2.0 to 7.0. A breaker surfactant is generally added to yield a self-inverting final product. Any suitable breaker surfactant may be employed, routine experimentation being the best means to determine which breaker surfactant will perform optimally for each emulsion system. Typical breaker surfactants include those having relatively high HLB numbers such as ethoxylated octyl and nonyl phenols, ethoxylated nonyl phenol formaldehyde resin, polyethylene oxide esters of fatty acids, dioctyl esters of sodium sulfosuccinate and others disclosed in U.S. 3,624,019 incorporated herein by reference. Typically, the breaker surfactant is used in an amount equal to about 0.5 to 5% by weight.

Once prepared, the emulsions of the present invention may be chemically modified in any known manner. "Chemically modified" is used herein to further treatments of the dispersed water soluble polymer and/or the addition of components to the dispersed water soluble polymer which, without the stabilization provided by the emulsion stabilizers, would cause the normally water soluble polymeric particles to coagulate or agglomerate. Examples of such further treatments are disclosed, for example, in U.S. Patent Nos. 4,052,353 and 4,171,296, incorporated herein by reference. The emulsion of the present invention may also be concentrated in any suitable manner, such as is disclosed in U.S. Patent No. 4,021,399, incorporated herein by reference.

To dewater a sludge, the cationic polymer composition of the present invention is added to a pulp or a sewage sludge which is subjected to any dewatering operation useful to dewater a sludge, e.g. compaction, filtration, flotation, centrifugation. The composition is added in an amount sufficient to facilitate the dewatering operation, whereby the dewatering operation performs better, as compared to the same operation utilizing a blend of conventionally-prepared polymers. For instance, when the present method is used to treat a sludge that is subjected to filtration, the present invention decreases the drainage time and increases the filtrate clarity, as compared to a conventional method utilizing a blend of two separately prepared cationic polymers.

Generally, the cationic polymer composition is added to a sludge in an amount ranging from about 50 to about 500 ppm or more, more preferably from about 100 to about 400 ppm, and even more preferably about 250 to about 300 ppm. The specific nature of the sludge, the individual components of the sludge, and the dewatering operation to which the sludge is subjected may affect the amounts used. Preferably, the cationic polymer composition is homogeneously distributed throughout the sludge with mild agitation. The sludge and the composition may be agitated by any convenient means, e.g. large slowly rotating paddles, effervescing gases, cascading streams and/or turbulent flow in conduits, and the like. Since the cationic polymer composition of the present invention has shown unexpectedly superior performance in sludge dewatering applications, it is believed that the composition may also be useful in related applications, e.g. as a paper retention aid and a drainage aid.

Applicant does not fully understand why the composition of this invention performs better than blends of individually prepared cationic polymers, and Applicant does not wish to be bound by any theory. It is believed, however, that a grafted polymer forms during the polymerization and that this grafted polymer may account
for the superior performance.

The following examples illustrate the present invention, and do not limit the scope of the invention in any way. All percents and parts are by weight unless otherwise specified.

### EXAMPLE 1

A sludge dewatering cationic polymer composition was prepared in accordance with this invention. First, an aqueous solution was formed by mixing 8 parts of 50% solution of an epichlorohydrin-dimethylamine (EPI-DMA) cationic polymer, 2.851 parts water, 52.707 parts of aqueous acrylamide nonionic monomer, 2.73 parts of 80% aqueous acryloxyethyltrimethylammonium chloride (AETAC) cationic monomer, 0.012 parts potassium bromate, 0.025 parts ammonium chloride, 0.2 parts 40% diethylenetriaminepentaacetic acid sodium salt. Second, an oil phase was formed by mixing 24 parts of Exxon Escaid 110 (oil) and 2 parts of sorbitan monoeleate. 66.75 parts of the aqueous solution was emulsified with 26 parts of the oil phase with conventional blade stirring to form an emulsion.

The emulsion was transferred to a reaction vessel with stirring, where it was sparged with nitrogen. To initiate polymerization, 0.01 parts of 25% Vazo 52 (Dupont) solution was added to the emulsion, and 2 parts of a 200 ppm solution of sodium metabisulfite was then added continuously during the polymerization. The temperature of the emulsion increased from room temperature to about 38 to 42°C. External cooling was provided to maintain this temperature range. The polymerization was complete in 3-4 hours. To produce a self-inverting emulsion product, 3.61 parts of a conventional breaker surfactant was added.

### EXAMPLE 2

To evaluate the performance of the cationic polymer composition produced in Example 1, a mixture of primary and secondary sludge (2.4% solids, pH 10.4) from a Georgia pulp and paper mill waste water treatment plant was used. The sludge was treated by adding various dosage levels (amounts) of a 0.2% solution of the composition into 200 ml of sludge and stirring for 15 seconds with a stirring blade (3 inches in diameter) rotating at 660 rpm. The treated sludges then underwent gravitational drainage through a belt press nylon filter in a modified Buchner funnel. The time (in seconds) required to generate 100 and 120 ml of filtrate was recorded. The relative clarity of the filtrate was measured using a turbidity wedge by reading the number on the wedge through the filtrate. The turbidity wedge is a wedge-shaped container with two parallel side walls, a transparent front wall and a black back wall, where the front and the back walls joined at the tip of the wedge. The back wall was inscribed with equally-spaced white scales, so that a relatively higher number was visible when a relatively clearer liquid was in the wedge. Table I shows the drainage times and the filtrate clarity obtained using the cationic polymer composition of Example 1, the method of the present invention.

### COMPARATIVE EXAMPLE A

The procedure disclosed in U.S. 5,100,951 to prepare a cationic polymer blend was performed. Specifically, (i) an acrylamide-acryloxyethyltrimethylammonium chloride (AETAC) cationic copolymer was prepared in the aqueous phase of a water-in-oil emulsion and (ii) an epichlorohydrin-polyamine polymer was prepared in an aqueous solution and then (iii) the aqueous solution was postblended into the emulsion as disclosed in U.S. 5,100,951.

First, the polymerization procedure of Example 1 above was repeated except without the EPI-DMA cationic polymer in the aqueous solution which is subjected to polymerization. After addition of the breaker surfactant, 8 parts of a 50% aqueous solution of EPI-DMA polymer was blended into 100 parts of the cationic copolymer to produce a cationic polymer blend having the same amount of EPI-DMA polymer as in the composition of Example 1.

The performance characteristics of the resulting water-in-oil emulsion were determined by repeating the procedure of Example 2. The drainage times and the filtrate clarity obtained are provided in Table I along with the drainage times and clarity from Example 2.

**TABLE I**

| Dosage | 100 mls Exam. 1 | 100 mls Comp. A | 120 mls Exam. 1 | 120 mls Comp. A | Filtrate Clarity Exam. 1 | Filtrate Clarity Comp. A |
|---|---|---|---|---|---|---|
| 200 ppm | 13.0 sec | 27.0 sec | 23.4 sec | 45.0 sec | 11 | 7 |
| 250 ppm | 6.6 | 16.9 | 10.6 | 27.3 | 15 | 10 |
| 300 ppm | 5.6 | 12.3 | 9.0 | 18.9 | 20 | 11 |
| 350 ppm | 4.1 | 7.1 | 6.7 | 11.2 | 30 | 14 |
| 400 ppm | 3.6 | 5.0 | 5.6 | 7.2 | 37 | 20 |

As can be seen from Table I, use of the cationic polymer composition of Example 1 (the method of the present invention) yielded substantially faster drainage times and higher clarities than did use of the polymer blend of Comparative Example A (the prior art). For instance, the time required to drain 100 ml of filtrate using a dosage rate of 200 ppm with the composition of Example 1 was 13.0 seconds while use of the blend of Comparative Example A required 27.0 seconds. At dosage rates of 300 ppm and below, the cationic polymer composition of the present invention reduced the drainage time by at least 50% while simultaneously increasing the filtrate clarity.

### EXAMPLE 3

The procedures of Example 1 were repeated to prepare a further cationic polymer composition in accordance with this invention, except that the aqueous solution was formed by mixing 8 parts of 50% solution of the EPI-DMA cationic polymer, 2.851 parts water, 52.5 parts aqueous acrylamide, 15.19 parts 80% aqueous acryloxyethyltrimethyl ammonium chloride (AETAC), 0.1 parts isopropyl alcohol, 0.2 parts 40% diethylenetriaminepentaacetic acid sodium salt.

The performance of the resulting cationic polymer composition was evaluated as per Example 2 using dosage rates of 88 and 99 ppm and the results are shown in Table II with the results of Comparative Example B.

### COMPARATIVE EXAMPLE B

To compare the dewatering performance of a prior art cationic polymer blend with the cationic polymer composition of Example 3, the procedure of Comparative Example A was repeated to produce a further cationic polymer blend per U.S. 5,100,951. The resulting blend was evaluated as in Comparative Example A and the results are shown in Table II below along with the results of Example 3.

**TABLE II**

| Dosage | 100 mls Exam. 3 | 100 mls Comp. B | 120 mls Exam. 3 | 120 mls Comp. B | Filtrate Clarity Exam. 3 | Filtrate Clarity Comp. B |
|---|---|---|---|---|---|---|
| 88 ppm | 7.5 sec | 19.9 sec | 13.0 sec | 30.0 sec | 17 | 10 |
| 99 ppm | 4.4 | 12.6 | 7.0 | 21.9 | 20 | 12 |

The data in Table II shows that use of a cationic polymer composition of the present invention is far superior to the use of a cationic polymer blend of the prior art.

## Claims

1. A cationic polymer water-in-oil emulsion prepared by (i) forming an aqueous solution of a water soluble nonionic monomer, a cationic monomer, a cationic polymer, and water, (ii) emulsifying the aqueous solution in a sufficient amount of a hydrocarbon oil to form a water-in-oil emulsion, and then (iii) polymerizing the monomers.

2. The emulsion of Claim 1, characterized in that the aqueous solution contains (i) the cationic polymer placed into the aqueous solution, (ii) a second cationic polymer produced by the copolymerization of the nonionic monomer and the cationic monomer, and (iii) a third cationic polymer in which at least one of the monomers, a polymer chain of said monomers, or a copolymer chain of said monomers, is chemically attached to the cationic polymer in the aqueous solution.

3. The emulsion of Claim 1, characterized in that the aqueous solution comprises at least 5 wt percent nonionic monomer, at least 3 wt percent cationic monomer, and at least 1 wt percent cationic polymer, on a dry basis.

4. The emulsion of Claim 1, characterized in that the nonionic monomer is selected from the group consisting of acrylamide, methacrylamide, N-methylacrylamide, N-methylmethacrylamide, and diacetone acrylamide.

5. The emulsion of Claim 1, characterized in that the cationic monomer is derived from a monomer selected from the group consisting of aminoalkylacrylate esters, aminoalkylmethacrylate esters, aminoalkylacrylamides, aminoalkylacrylmethacrylamides, 3- (acrylamido) propyltrimethylammonium chloride, 3-(methacrylamido) propyltrimethylammonium chloride, diallyldimethylammonium chloride, and 1-trimethylammonium-2-hydroxypropyl methacrylate.

6. The emulsion of Claim 1, characterized in that the cationic polymer is selected from the group consisting of polydiallyldialkylammonium salts and polyquaterary ammonium salts of polymers prepared from epihalohydrins and their precursors reacted with dialkyl amines, with or without minor amounts of amines with higher functionality.

7. The emulsion of Claim 1, characterized in that the cationic polymer is an epipolyamine which is the reaction product of an epihalohydrin or its precursor and dimethylamine.

8. The emulsion of Claim 1, characterized in that a breaker surfactant is added after polymerization to yield a self-inverting product.

9. The emulsion of Claim 1, characterized in that the breaker surfactant is selected from the group consisting of ethoxylated octyl phenols, nonyl phenols, ethoxylated nonyl phenol formaldehyde resin, polyethylene oxide esters of fatty acids, and dioctyl esters of sodium sulfosuccinate.

10. A cationic polymer water-in-oil emulsion which comprises (i) a first cationic polymer, (ii) a second cationic polymer produced from the polymerization of a nonionic monomer and a cationic monomer, and (iii) a third cationic polymer in which at least one of the monomers, a polymer chain of the monomers, or a copolymer chain of the monomers, is chemically attached to the first cationic polymer.

11. The cationic polymer emulsion of Claim 10, characterized in that the first cationic polymer is a polyquaterary ammonium salt of a polymer prepared from an epihalohydrin or a precursor reacted with a dialkylamine, with or without a minor amount of an amine with higher functionality.

12. A method for dewatering a sludge characterized by adding the cationic polymer emulsion of Claims 1-11 to the sludge and subjecting the sludge to a dewatering operation.

13. The method of Claim 12, characterized in that the dewatering operation is selected from the group consisting of compaction, filtration, flotation, and centrifugation.
